# EUROPÄISCHE PATENTSCHRIFT

(11) **EP 1 115 953 B1**
(45) Veröffentlichungstag und Bekanntmachung des Hinweises auf die Patenterteilung: **24.08.2005**
(21) Anmeldenummer: 00945932.2
(22) Anmeldetag: 19.07.2000
(51) Int. Cl.: E04B 1/94, E06B 5/16, E06B 3/66, E04B 2/74

(54) **BRANDSCHUTZWAND**
FIRE WALL
PAROI COUPE-FEU

(30) Priorität: 21.07.1999 DE 19933400
(43) Veröffentlichungstag der Anmeldung: 18.07.2001
(73) Patentinhaber: DORMA GmbH + Co. KG, 58256 Ennepetal (DE)
(72) Erfinder: DEGELSEGGER, Walter, A-4690 Schwanenstad (AT)
(86) Internationale Anmeldenummer: PCT/EP2000/006888
(87) Internationale Veröffentlichungsnummer: WO 2001/007727

(56) Entgegenhaltungen:
- EP-A- 0 472 109
- EP-A- 1 020 605
- WO-A-96/34169
- DE-A- 3 438 876
- DE-A- 3 714 629
- DE-A- 4 123 977
- DE-A- 19 543 148
- DE-A- 19 733 381
- FR-A- 2 662 739

## Beschreibung

Die Erfindung betrifft eine Brandschutzwand zur Vermeidung des Übergreifens von Feuer, die in einem Bereich eines Brandabschnittes eingesetzt werden kann.

Eine solche Brandschutztür ist beispielsweise der EP 0401555 A2 zu entnehmen, wo innerhalb eines Metallrahmens, der eine umlaufende Aufnahmenut hat, eine Glasscheibe eingesetzt ist. Dabei endet die Glasscheibe vor dem Rahmen und wird durch zusätzliche auf der Glas-scheibe befestigte Metallkranzstreifen, die als Ausgleichsadapter fungieren, mit dem Metallrahmen verbunden. Die Metallstreifen werden dabei mit einem üblichen Brandschutzkleber, beispielsweise auf Wasser-glasbasis, verbunden.

Ein Rahmenprofil für Brandschutztüren ist der EP 0444393 A2 zu entnehmen, bei dem eine Glasscheibe von einem starken Rahmenprofil gehalten wird. Das Rahmenprofil ist als Hohlkammerprofil ausgeführt und weist in den Kammern eingeführte Brandschutzplatten aus, die die Feuerbeständigkeit einer solchen Tür garantieren.

Eine feuerwiderstandsfähige Verglasung wird in der DE 2645259 A1 beschrieben. Dabei werden die Silikat-Glasscheiben aus vorgespanntem Glas auf der einen Seite verwendet und auf der anderen Seite eines dazwischenliegenden Luftzwischenraumes eine armierte Silikat-Glasscheibe verwendet. Der Aufbau einer solchen feuerbeständigen Verglasung wird durch einen den Rand einfassenden und diesen übergreifenden metallischen Rahmen bewerkstelligt.

DE 2742665 A1 zeigt eine feuerhemmende Schwing- oder Pendeltür, bei der der Türstock bzw. die Ränder der Flügel ein wärme-isolierendes Material aufweisen, das sich über die gesamte Länge bzw. Breite er-streckt. Dieses wärme-isolierende Material wird durch Wärmeeinwirkung aufgequellt, so daß das Element der Tür im Brandfalle einen sicheren Abschluß gegen Feuer mit sich bringt. Diese Tür besteht aus einem flächigen Material, welches nicht durchsichtig ist und wird in einem Teilbereich durch ein einzusetzendes Fenster unterbrochen.

In der DE-A-19733381 wird eine rahmenlose Scheibe beschrieben, bei der zwischen den Scheiben ein Abstandshalter und ein Trage- und/oder Randabschlußelement angeordnet ist. Die in der Aufnahmenut aufgenommenen Beschläge sind von den Scheiben verdeckt, d. h. im äußeren Randbereich des Flügels unauffällig angeordnet.

Die DE-A-4123977 beschreibt eine feuerwiderstandsfähige Glastrennwand, die an den vertikalen Kanten zwischen den einzelnen Elementen Dichtungsprofile aufweist.

Eine stabile Positionierung zwischen den Elementen ist nach diesen Druckschriften nicht gewährleistet.

Brandschutzwände werden darüber hinaus aus feuerfesten Materialien gemauert. Sollen jedoch Brandschutzwände in die heute zeitgemäße Architektonik eingebunden werden, so ist das mit den allgemein bekannten Brandschutzwänden nicht zu bewerkstelligen. Der Weg geht heute dahin, den Innenbereich von Gebäuden lichtdurchflutet, d.h. transparent aufzubauen. In einem solchen Falle kann natürlich eine Wand aus feuerfest gemauerten Materialien nicht verwendet werden. Es ist deshalb Aufgabe der Erfindung, eine Brandschutzwand vorzuschlagen, die unter wirtschaftlichen Aspekten flexibel hergestellt werden kann und auch nachträglich in Gebäuden der vorbesagten Architektonik eingebaut werden kann. Es soll gleichzeitig bei der Lösung dieser Aufgabe mit bedacht werden, daß auch ein erhöhter Sicherheitsaspekt nicht unberücksichtigt bleibt.

Die Aufgabe der Erfindung wird durch eine Brandschutzwand gemäß Anspruch 1 gelöst. Die abhängigen Ansprüche geben weitere Ausgestaltungen des erfindungsgemäßen Gegenstandes wieder.

Es wird deshalb vorgeschlagen, eine Brandschutzwand aus modular aufgebauten Teilelementen herzustellen. Die Teilelemente bestehen dabei im wesentlichen aus einem umlaufenden Rahmen, der aus Einzelprofilen zusammengesetzt wird. Der Rahmen wird durch Glasscheiben jeweils so abgedeckt, daß die Glasscheiben beabstandet über den Rahmen sich ausbreiten. Die Profile des Rahmens schließen dabei an den Rändern die Glasscheiben ein. Damit die Rahmen nicht sichtbar sind, ist durch eine Teilemaillierung der Glasscheiben bzw. des Rahmens dieser Blickfang abgedeckt.

Die Profile sind so gestaltet, daß sie mindestens einen Hohlraum aufweisen, der zu den äußeren Rändern hin einen Durchbruch oder eine Vertiefung aufweist. An diesem Durchbruch kann zum einen ein Abschlußprofil gesetzt werden und darüber hinaus auch ein Verbindungselement, welches beispielsweise mindestens zwei Teilelemente kraft- und formschlüssig untereinander verbindet. Dabei befindet sich in dem Bereich der angrenzenden Abschlußprofile jeweils in den Abschlußprofilen ein Brandschutzlaminat, welches durch Einwirkung von Hitze so aufquellt, daß eine hermetisch abgedichtete Brandschutzwand entsteht. Darüber hinaus befinden sich in den Abschlußprofilen umlaufend an jedem Rand T-Nuten, in welche Dichtelemente eingesetzt sind. Dadurch wird ein hermetisches Abschließen der Teilelemente innerhalb einer Maueröffnung sichergestellt.

Das Verbindungselement, welches in mehrfacher Ausfertigung zur Verbindung von Teilelementen untereinander Verwendung findet, ist als stabförmiges Element ausgebildet. Dabei befinden sich am Ende des Stabes Verhakungselemente, die kraft- und formschlüssig mit dem Stab verbunden sind. In der Mitte des Stabes ist ein Verdrehmechanismus angebracht, der es gestattet unter Zuhilfenahme eines Werkzeuges die zuvor in die Rahmen eingesetzten Verbindungselemente zu verdrehen. Durch das Verdrehen wird erreicht, daß die Verhakungselemente sich in dem Hohlraum des Profiles verhaken und ein Auseinanderziehen der Teilelemente nicht mehr möglich ist. Als Drehmechanismus kann beispielsweise ein auf dem Stab kraft- und formschlüssig angebrachter Vierkant oder Sechskant eingesetzt werden. Es ist jedoch auch möglich, hier eine Scheibe anzubringen, auf deren Umfang entsprechende Bohrungen vorhanden sind, die es gestatten, ein Werkzeug anzusetzen.

Sowohl das Profil für den Rahmen als auch das Abschlußprofil können aus Kunststoff, Stahl, Holz oder Leichtmetall hergestellt werden. Wird ein Kunststoff für die Herstellung verwendet, so wird vorgeschlagen, hier vorzugsweise einen glasfaserverstärkten Kunststoff einzusetzen, der feuerwiderstandsfähig ist.

Durch die beabstandeten Scheiben kann je nach Braridklasse eine bestimmte Feuerbeständigkeit einer solchen Brandschutzwand erreicht werden. Bei Erreichung einer höheren Brandklasse kann der zwischen den beabstandeten Scheiben bestehende Zwischenraum entweder durch ein Brandschutzgel aufgefüllt werden oder unter Verwendung eines speziellen Brandschutzglases zu einer Brandschutzwand mit einer höheren Feuerbeständigkeit ausgestattet werden.

Es zeigt sich, daß sich durch die modulare Bauweise der Brandschutzwand unter Verwendung von gleichen Grundbauelementen, wie z.B. dem Rahmen und den Glasscheiben, die aus Sicherheitsglas bestehen, nur unter Hinzufügung des Brandschutzgels bzw. Brandschutzglases eine nach außen hin gleich ausgestaltete Brandschutzwand, jedoch mit einer höheren Brandschutzwirkung, geschaffen werden kann, die transparent ist.

Es versteht sich, daß in eine derartige Brandschutzwand auch eine Brandschutztür eingebaut werden kann. Eine derartige Brandschutztür oder ein Brandschutzfenster kann als einflügelige oder zweiflügelige Drehflügeltür oder aber auch als Pendeltür ausgeführt werden. Der Aufbau einer solchen Brandschutztür bzw. eines Brandschutzfensters würde mit den gleichen Grundmaterialien durchgeführt, wie es auch für die Brandschutzwände der vorgenannten Art verwendet wird.

Die Erfindung wird anhand eines in den Figuren schematisch dargestellten möglichen Ausführungsbeispieles näher erläutert. Es zeigt:
- Figur 1:: Eine Schnittdarstellung durch einen Verbindungsbereich zweier Teilelemente in einer Ausschnittsdarstellung.
- Figur 2:: Ein Verbindungselement.

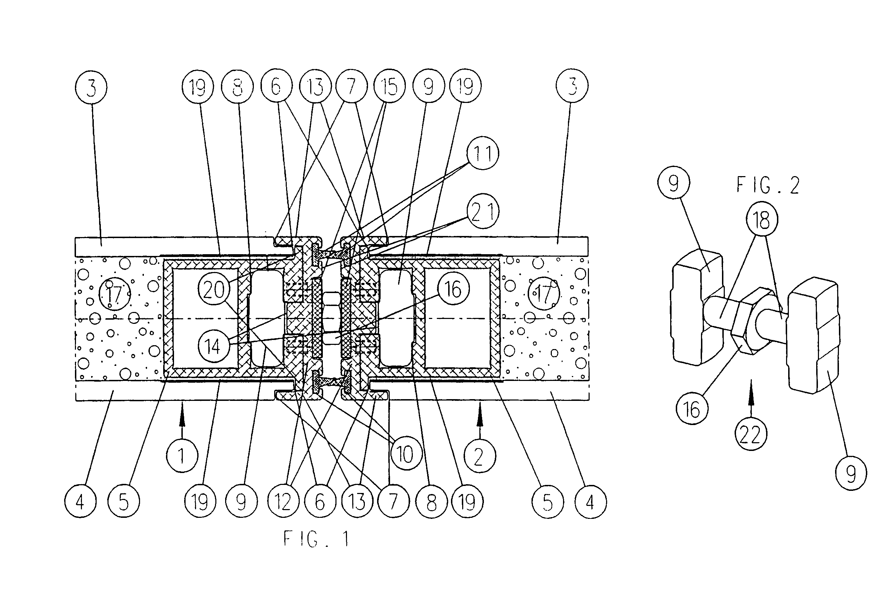

In der Figur 1 werden zwei miteinander verbundene und mit 1 und 2 bezeichnete Teilelemente wiedergegeben. Die in diesem Ausführungsbeispiel gezeigten Teilelemente 1 und 2 sind identisch aufgebaut,und werden durch einen durch Profile 5, die zu einem nicht bezeichneten Rahmen untereinander verbunden sind, und gleichzeitig zwei mit 3 und 4 bezeichnete Glasscheiben beabstanden, gebildet. Das Profil 5 beinhaltet dabei mindestens einen Hohlraum 8. In dem Ausführungsbeispiel der Figur 1 weist das Profil 5 zwei Hohlräume auf. In dem Bereich, in dem das Profil 5 mit den Glasscheiben 3 und 4 in Berührung kommt, ist eine Teilemaillierung 19 angebracht, die verhindern soll, daß der Rahmen sichtbar ist. Es ist jedoch auch möglich, den Rahmen sichtbar zwischen den beabstandeten Glasscheiben 3 und 4 einzubringen, wobei die Glasscheiben 3, 4 stets kraft- und formschlüssig mit dem Rahmen verbunden werden.

Das Profil 5 weist an seiner Randseite, das heißt am Rand des Teilelementes 1 oder 2 seitlich angeformte Vorsprünge 20 auf, welche Glasscheibenkanten 6 der Glasscheiben 3 und 4 abdecken. Somit ist gleichzeitig ein wirksamer Kantenschutz dieser Glasscheibenkanten 6 gegeben. In dem Ausführungsbeipsiel der Figur 1 weisen die Glasscheiben 3 und 4 im Bereich der Glasscheibenkanten 6 einen Rücksprung 7 auf. Es ist jedoch auch erfindungsgemäß möglich, daß hier Anfasungen der Glasscheibenkanten 6 vorliegen. Das Profil 5 mit seinen Vorsprüngen 20 wird durch ein Abschlußprofil 12 abgedeckt. Das Abschlußprofil 12 hat einen Vorsprung 14, derin eine innerhalb des Profils 5 vorhandene Nut eintaucht. So ist das Profil sicher bzw. richtig plaziert und kann durch entsprechende Schraubelemente mit dem Profil 5 kraft- und formschlüssig verbunden werden.

Das Abschlußprofil 12 weist an seinen Enden Vorsprünge 13 auf, die so gestaltet sind, daß sie die Rücksprünge 7 an den Glasscheibenkanten 6 entsprechend abdecken. In einer Außenkontur 21 des Abschlußprofiles 12 sind nahe der seitlichen Ränder T-Nuten 10 eingelassen, in welche Dichtungen 11 eingesetzt werden. Aus dem Ausführungsbeispieles der Figur 1 ist ersichtlich, daß durch die Verwendung der Dichtungen 11 beim Aneinanderfügen der Teilelemente 1 und 2 eine geschlossenen Front entsteht und somit ein Durchdringen von Rauch nicht gegeben ist. Des weiteren befindet sich in der Außenkontur 21 ein Rücksprung, in dem ein Brandschutzlaminat 15 eingelegt ist. Dieses Brandschutzlaminat hat die Aufgabe, bei Ausbruch eines Brandes unter Einwirkung einer erhöhten Temperatur aufzuquellen und die Teilelemente 1, 2 unter einander und gegenüber Decke und Wand absperren und somit einen sicheren Brandabschnitt zu gewährleisten.

Um nun die Teilelemente 1 und 2 untereinander zu verbinden, wird ein Verbindungselement 22, wie es aus der Figur 2 ersichtlich ist, eingesetzt. Das Verbindungselement 22 besteht im wesentlichen aus einem Stab 18, an dessen Enden jeweils Verhakungselemente 9 kraft- und formschlüssig angeformt sind. In der Mitte des Stabes 18 ist ein Verdrehmechanismus angebracht, der beispielsweise in Form eines Vierkant- oder Sechskantes ausgeführt sein kann. Es ist jedoch auch denkbar, hier in den Stab 18 entsprechende Bohrungen direkt oder unter Zuhilfenahme einer Scheibe einzubringen, um ein Verdrehen des Verbindungselementes 22 im eingesetzten Zustand zu bewirken. Dabei greifen die Verhakungselemente 9 in den Hohlraum 8 der Profile 5 zum einen ein und werden gleichzeitig durch den Verdrehmechanismus 16 beabstandet. Durch diese maßliche Abstimmung wird ein definiertes Abstandsmaß der Teilelement 1 und 2 untereinader gewährleistet. Durch das Verdrehen des Verbindungselementes 22 über den Verdrehmechanismus 16, welches unter Zurückdrücken der Dichtungen 11 erfolgen kann, wird eine sichere und kraft- und formschlüssig Verbindung der Teilelemente 1 und 2 untereinander gegeben. Auch kann hierüber der Anschluß nach unten und oben innerhalb eines Gebäudes erreicht werden. Gleichzeitig ist es auch möglich, innerhalb der Brandschutzwand Oberlichte einzubauen.

Um einen Anschluß der Teilelemente 1, 2 gegenüber bestehenden Wänden, Decken, Fußböden zu erreichen, kann beispielsweise aus den gleichen Profilen 5 an den Wänden, Decken, und Fußböden eine Anlage- und Verbindungsmöglichkeit geschaffen werden.

### Bezugszeichen

- 1: Teilelement
- 2: Teilelemet
- 3: Glasscheibe
- 4: Glasscheibe
- 5: Profil
- 6: Glasscheibenkante
- 7: Rücksprung
- 8: Hohlraum
- 9: Verbindungselement
- 10: T-Nut
- 11: Dichtung
- 12: Abschlußprofil
- 13: Vorsprung
- 14: Vorspung
- 15: Brandschutzlaminat
- 16: Verdrehmechanismus
- 17: Zwischenraum
- 18: Stab
- 19: Teilemaillierung
- 20: Vorsprung
- 21: Außenkontur
- 22: Verbindunsgelement

## Patentansprüche

1. Brandschutzwand zur Vermeidung des Übergreifens von Feuer, die in einem Bereich eines Brandabschnittes eingesetzt ist und aus modular aufgebauten Teilelementen (1, 2) besteht, die im Wesentlichen aus durch zu einem umlaufenden Rahmen zusammengesetzten Profile (5) bestehen, die gleichzeitig zwei Glasscheiben (3, 4) beabstanden, wobei die Glasscheiben (3, 4) bis an den äußeren Rand der Profile (5) reichen, und der Rahmen durch eine Teilemaillierung (19) der Glasscheiben abgedeckt wird und die Teilelemente (1 ,2) untereinander durch Verbindungselemente (22) kraft- und formschlüssig unter Zwischenlage von Brandschutzlaminaten (15) verbunden sind.

2. Brandschutzwand nach Anspruch 1, **dadurch gekennzeichnet, daß** zwischen den beabstandeten Glasscheiben (3, 4) ein transparentes Brandschutzmittel vorhanden ist.

3. Brandschutzwand nach Anspruch 1, **dadurch gekennzeichnet, daß** das Profil (5) mindestens einen Hohlraum (8) aufweist, wobei der Hohlraum (8) einen Durchbruch oder Vertiefung beinhaltet, der zum Anschluß von weiteren Profilen bzw. zum Einsatz der Verbindungselemente (22) geeignet ist.

4. Brandschutzwand nach den Ansprüchen 1 und 2, **dadurch gekennzeichnet, daß** das Profil (5) an jeder Seite Vorsprünge (20) aufweist, die die Glasscheibenkanten (6) der Glasscheiben (3, 4) ganz oder teilweise abdecken.

5. Brandschutzwand nach den Ansprüchen 1 bis 4, **dadurch gekennzeichnet, daß** die Glasscheiben (3, 4) im Bereich der Glasscheibenkanten (6) Rücksprünge (7) aufweisen, die von Vorsprüngen (13) eines Abschlußprofiles (12) ausgefüllt werden.

6. Brandschutzwand nach den Ansprüchen 1 bis 4, **dadurch gekennzeichnet, daß** die Glasscheiben (3, 4) im Bereich der Glasscheibenkanten (6) Anfaserungen aufweisen, die von dem Abschlußprofil (12) überdeckt werden.

7. Brandschutzwand nach den Ansprüchen 5 und 6, **dadurch gekennzeichnet, daß** eine Außenkontur (21) des Abschlußprofiles (12) seitlich jeweils durch eine T-Nut (10) unterbrochen wird.

8. Brandschutzwand nach Anspruch 7, **dadurch gekennzeichnet, daß** in die T-Nut (10) eine Dichtung (11) eingesetzt wird.

9. Brandschutzwand nach einem oder mehreren der vorhergehenden Ansprüche, **dadurch gekennzeichnet, daß** in der Außenkontur (21) mindestens ein Brandschutzlaminat (15) integriert ist.

10. Brandschutzwand nach einem oder mehreren der vorhergehenden Ansprüche, **dadurch gekennzeichnet, daß** in dem Profil (5) das Abschlußprofil (12) angeschlossen werden kann.

11. Brandschutzwand nach einem oder mehreren der vorhergehenden Ansprüche, **dadurch gekennzeichnet, daß** das Verbindungselement (22) aus einem stabförmigen Bauteil, mit in der Mitte angeordneten Verdrehmechanismus (16) besteht, wobei jeweils an den Enden Verhakungselemente. (9) kraft- und formschlüssig angebracht sind.

12. Brandschutzwand nach Anspruch 11, **dadurch gekennzeichnet, daß** der Verdrehmechanismus (16) einen Vierkant oder Sechskant aufweist.

13. Brandschutzwand nach Anspruch 11, **dadurch gekennzeichnet, daß** der Verdrehmechanismus (16) durch Bohrungen in dem Stab (18) gebildet wird.

14. Brandschutzwand nach einem oder mehreren der vorhergehenden Ansprüche, **dadurch gekennzeichnet, daß** die Verhakungselement (22) durch den Durchbruch in dem Profil (5) greifen und durch Verdrehung das Verbindungselement (22) in den Teilelementen (1, 2) festsetzen und gleichzeitig diese miteinander kraft- und formschlüssig verbinden.

15. Brandschutzwand nach einem oder mehreren der vorhergehenden Ansprüche, **dadurch gekennzeichnet, daß** das Profil (5) und das Abschlußprofil (12) aus Kunststoff, Stahl, Holz oder Leichtmetall besteht.

16. Brandschutzwand nach Anspruch 15, **dadurch gekennzeichnet, daß** der Kunststoff ein glasfaserverstärkter Kunststoff ist.

17. Brandschutzwand nach Anspruch 1, **dadurch gekennzeichnet, daß** innerhalb der Brandschutzwand eine Brandschutztür eingebaut ist.

18. Brandschutzwand nach Anspruch 17, **dadurch gekennzeichnet, daß** die Brandschutztür eine ein- oder zweiflügelige Drehflügeltür ist.

19. Brandschutzwand nach Anspruch 17, **dadurch gekennzeichnet, daß** die Brandschutztür eine ein- oder zweiflügelige Pendeltür ist.

20. Brandschutzwand nach einem oder mehreren der vorhergehenden Ansprüche, **dadurch gekennzeichnet, daß** die Glasscheiben (3, 4) aus einem Sicherheitsglas bestehen.

21. Brandschutzwand nach Anspruch 2, **dadurch gekennzeichnet, daß** das Brandschutzmittel ein Brandschutzgel ist.

22. Brandschutzwand nach Anspruch 2, **dadurch gekennzeichnet, daß** das Brandschutzmittel ein Brandschutzglas ist.

## Claims

1. A fire rated wall to prevent fire from spreading, which is used in a region of a fire protection section and consists of modularly designed partial elements (1, 2), which basically consist of profiles (5) arranged to build a surrounding frame, which simultaneously space apart two glass panes (3, 4), said glass panes (3, 4) extending as far as to the exterior border of the profiles (5), and the frame being covered by a partial enamelling (19) on the glass panes and the partial elements (1, 2) being positively and non-positively connected to each other by means of connecting elements (22) with intermediate layers of fire rated laminates (15).

2. A fire rated wall according to claim 1, **characterized in that** a transparent fire protection medium is included between the spaced glass panes (3, 4).

3. A fire rated wall according to claim 1, **characterized in that** the profile (5) presents at least one hollow space (8), said hollow space (8) including an opening or an indentation suitable for connecting further profiles, respectively for inserting the connecting elements (22).

4. A fire rated wall according to the claims 1 and 2, **characterized in that** the profile (5) presents projections (20) on each side, which completely or partially cover the glass pane edges (6) of the glass panes (3, 4).

5. A fire rated wall according to the claims 1 to 4, **characterized in that** the glass panes (3, 4) present recesses (7) in the region of the glass pane edges (6), which are filled in by projections (13) of a closing profile (12).

6. A fire rated wall according to the claims the 1 to 4, **characterized in that** the glass panes (3, 4), in the region of the glass pane edges (6), present chamfers, which are covered by the closing profile (12).

7. A fire rated wall according to the claims 5 and 6, **characterized in that** an exterior contour (21) of the closing profile (12) is laterally discontinued by one T-shaped groove (10) respectively.

8. A fire rated wall according to claim 7, **characterized in that** a seal (11) is inserted into the T-shaped groove (10).

9. A fire rated wall according to one or several of the preceding claims, **characterized in that** the exterior contour (21) integrates at least one fire rated laminate (15).

10. A fire rated wall according to one or several of the preceding claims, **characterized in that** the closing profile (12) can be connected within the profile (5).

11. A fire rated wall according to one or several of the preceding claims, **characterized in that** the connecting element (22) consists of a bolt-type component including a rotary mechanism (16) arranged in the centre, whereby, respectively at the ends thereof, interlocking elements (9) are positively and non-positively mounted.

12. A fire rated wall according to claim 11, **characterized in that** the rotary mechanism (16) presents a square or a hexagon.

13. A fire rated wall according to claim 11, **characterized in that** the rotary mechanism (16) is realized by means of boreholes in the bolt (18).

14. A fire rated wall according to one or several of the preceding claims, **characterized in that** the interlocking elements (9) pass through the opening in the profile (5) and, by means of rotation, they block the connecting element (22) in the partial elements (1, 2) and simultaneously connect them positively and non-positively to each other.

15. A fire rated wall according to one or several of the preceding claims, **characterized in that** the profile (5) and the closing profile (12) are made from plastic material, steel, wood or light metal.

16. A fire rated wall according to claim 15, **characterized in that** the plastic material is a glass-fibre reinforced plastic material.

17. A fire rated wall according to claim 1, **characterized in that** a fire rated door is mounted within the fire rated wall.

18. A fire rated wall according to claim 17, **characterized in that** the fire rated door is a single leaf or double leaf swing door.

19. A fire rated wall according to claim 17, **characterized in that** the fire rated door is a single leaf or double leaf pivot door.

20. A fire rated wall according to one or several of the preceding claims, **characterized in that** the glass panes (3, 4) consist of safety glass.

21. A fire rated wall according to claim 2, **characterized in that** the fire protection medium is a fire protection gel.

22. A fire rated wall according to claim 2, **characterized in that** the fire protection medium is fire rated glass.

## Revendications

1. Paroi coupe-feu pour empêcher la propagation d'un feu, qui est installée dans une région d'une section coupe-feu et est composée d'éléments partiels (1, 2) modulaires, qui sont composés essentiellement de profilés montés pour former un cadre circonférentiel, qui simultanément espacent deux vitres en verre (3, 4), lesdits vitres en verre (3, 4) s'étendant jusqu'au bord extérieur des profilés (5), et le cadre étant couvert par un émaillage partiel (19) des vitres en verre et les éléments partiels (1, 2) étant interconnectés par la force et par la forme par l'intermédiaire d'éléments d'interconnexion (22), des couches coupe-feu laminées (15) étant intercalées.

2. Paroi coupe-feu selon la revendication 1, **caractérisée en ce qu'**un moyen coupe-feu transparent est prévu entre les vitres en verre (3, 4) espacées.

3. Paroi coupe-feu selon la revendication 1, **caractérisée en ce que** le profilé (5) présente au moins un espace creux (8), ledit espace creux (8) contenant un passage ou un évidement qui est approprié au raccordement d'autres profilés, respectivement à l'insertion des éléments d'interconnexion (22).

4. Paroi coupe-feu selon les revendications 1 et 2, **caractérisée en ce que** le profilé (5), à chaque côté, présente des projections (20) qui couvrent complètement ou partiellement les bords de vitres en verres (6) des vitres en verre (3, 4).

5. Paroi coupe-feu selon les revendications 1 à 4, **caractérisée en ce que**, dans la région des bords de vitres en verre (6), les vitres en verre (3, 4) présentent des retraits (7) qui sont remplis par des projections (13) d'un profilé terminal (12).

6. Paroi coupe-feu selon les revendications 1 à 4, **caractérisée en ce que**, dans la région des bords de vitres en verre (6), les vitres en verre (3, 4) présentent des chanfreins qui sont couverts par le profilé terminal (12).

7. Paroi coupe-feu selon les revendications 5 et 6, **caractérisée en ce que**, latéralement, un contour extérieur (21) du profilé terminal (12) est interrompu par une rainure en forme de T (10) respectivement.

8. Paroi coupe-feu selon la revendication 7,
**caractérisée en ce qu'**un joint (11) est inséré dans la rainure en forme de T (10).

9. Paroi coupe-feu selon l'une ou plusieurs des revendications précédentes, **caractérisée en ce qu'**au moins une couche coupe-feu laminée (15) est intégrée dans le contour extérieur (21).

10. Paroi coupe-feu selon l'une ou plusieurs des revendications précédentes, **caractérisée en ce que** le profilé terminal (12) peut être raccordé au profilé (5).

11. Paroi coupe-feu selon l'une ou plusieurs des revendications précédentes, **caractérisée en ce que** l'élément d'interconnexion (22) consiste en un composant en forme de boulon ayant un mécanisme rotatif (16) agencé au centre, des éléments d'accrochage (9) étant montés par la force et par la forme aux extrémités respectivement.

12. Paroi coupe-feu selon la revendication 11,
**caractérisée en ce que** le mécanisme rotatif (16) présente un carré ou un hexagone.

13. Paroi coupe-feu selon la revendication 11, **caractérisée en ce que** le mécanisme rotatif (16) est aménagé par l'intermédiaire de perçages dans le boulon (18).

14. Paroi coupe-feu selon l'une ou plusieurs des revendications précédentes, **caractérisée en ce que** les éléments d'accrochage (9) traversent le passage dans le profilé (5) et, par rotation, bloquent l'élément d'interconnexion (22) dans les éléments partiels (1, 2) et, simultanément raccordent ces derniers mutuellement par la force et par la forme.

15. Paroi coupe-feu selon l'une ou plusieurs des revendications précédentes, **caractérisée en ce que** le profilé (5) et le profilé terminal (12) sont réalisés en matière plastique, en acier, en bois ou en métal léger.

16. Paroi coupe-feu selon la revendication 15, **caractérisée en ce que** la matière plastique consiste en matière plastique renforcée de fibres de verre.

17. Paroi coupe-feu selon la revendication 1, **caractérisée en ce que** une porte coupe-feu est installée dans la paroi coupe-feu.

18. Paroi coupe-feu selon la revendication 17, **caractérisée en ce que** la porte coupe-feu est une porte tournante ayant un vantail ou deux vantaux.

19. Paroi coupe-feu selon la revendication 17, **caractérisée en ce que** la porte coupe-feu est une porte pivotante ayant un vantail ou deux vantaux.

20. Paroi coupe-feu selon l'une ou plusieurs des revendications précédentes, **caractérisée en ce que** les vitres en verre (3, 4) sont réalisés en verre de sécurité.

21. Paroi coupe-feu selon la revendication 2, **caractérisée en ce que** la matière coupe-feu consiste en un gel coupe-feu.

22. Paroi coupe-feu selon la revendication 2, **caractérisée en ce que** la matière coupe-feu consiste en un verre coupe-feu.
